# EUROPÄISCHE PATENTSCHRIFT

(11) **EP 0 439 812 B1**
(45) Veröffentlichungstag und Bekanntmachung des Hinweises auf die Patenterteilung: **16.06.1993**
(21) Anmeldenummer: 90125237.9
(22) Anmeldetag: 21.12.1990
(51) Int. Cl.: B65G 67/02, B65G 69/24

(54) **Ladebühne für Kombi-Fahrzeuge**
Loading platform for station wagons
Plate-forme de chargement pour voitures commerciales

(30) Priorität: 29.01.1990 DE 4002535
(43) Veröffentlichungstag der Anmeldung: 07.08.1991
(73) Patentinhaber: Warny, Henri, B-4780 St. Vith (BE)
(72) Erfinder: Warny, Henri, B-4780 St. Vith (BE)
(74) Vertreter: Tetzner, Volkmar, Dr.-Ing. Dr. jur.

(56) Entgegenhaltungen:
- DE-B- 1 056 056
- FR-A- 2 286 024

## Beschreibung

Die Erfindung betrifft eine Ladebühne für Kombi-Fahrzeuge.

Mit Kombi-Fahrzeugen werden häufig schwere und/oder sperrige Waren transportiert, wobei das Be- und Entladen des Fahrzeuges oft von einer einzigen Person erledigt werden muß. Diese Arbeitsvorgänge sind nicht nur mühsam und anstrengend, sondern erfordern vielfach auch einen - beispielsweise beim Kundendienst - recht kostspieligen Zeitaufwand.

Nachteilig bei dem bisherigen manuellen Be- und Entladen ist ferner, daß beim Ein- und Ausladen schwerer und unhandlicher Gegenstände leicht das Fahrzeug und seine Heckklappendichtungen beschädigt werden.

Der Erfindung liegt daher die Aufgabe zugrunde, eine Ladebühne für Kombi-Fahrzeuge zu schaffen, die es auch einer einzelnen Bedienungsperson ermöglicht, das Be- und Entladen des Fahrzeuges mit schwerer Ware rasch und mühelos durchzuführen.

Diese Aufgabe wird erfindungsgemäß durch die Merkmale des Anspruchs 1 gelöst.

Zweckmäßige Ausgestaltungen der Erfindung sind Gegenstand der Unteransprüche.

Die erfindungsgemäße Ladebühne besteht in ihrem grundsätzlichen Aufbau aus folgenden Bestandteilen:
a) einer in den Laderaum des Fahrzeugs einschiebbaren und aus dem Laderaum herausziehbaren Plattform,
b) mit der Plattform schwenkbeweglich verbundene Radhalterungen, die im ausgeschwenkten Zustand die aus dem Fahrzeug herausgezogene Plattform auf dem Erdboden abstützen und im eingeschwenkten Zustand etwa parallel zu der im Fahrzeug befindlichen Plattform dicht unter dieser liegen,
c) mit der Plattform (4) verbundenen Arretierungseinrichtungen zur Sicherung der Radhalterungen im ausgeschwenkten Zustand,
d) einem Betätigungselement zum Lösen der Arretierungseinrichtungen.

Wird die Ladebühne aus dem Fahrzeug herausgezogen, so senkt sie ihre Räder bis auf den Erdboden ab und kann dann selbständig auf dem Erdboden gerollt werden. Sie kann infolgedessen in beliebiger Entfernung außerhalb des Fahrzeuges be- und entladen und dann wieder in das Fahrzeug hineingeschoben werden.

Für den Benutzer entfällt dadurch das anstrengende Herumkriechen bzw. -rutschen im Laderaum des Fahrzeuges, um schwere und/oder sperrige Waren ein- oder auszulaladen. Ein mit einer Vielzahl von Produkten beladenes Kombi-Fahrzeug kann auf diese Weise innerhalb weniger Sekunden entladen werden. Entsprechend groß ist die Zeitersparnis beim Beladen des Fahrzeuges.

Unter Zuhilfenahme eines Kranes kann ferner die Lade bühne - und mittels der Ladebühne dann das Fahrzeug auch mit solchen Gütern beladen werden, deren manuelle Handhabung durch eine einzige Person aus Gewichtsgründen ausgeschlossen ist.

Durch die Benutzung der erfindungsgemäßen Ladebühne wird dabei eine Beschädigung des Fahrzeuges, insbesondere seiner Heckklappendichtungen, mit Sicherheit ausgeschlossen.

Ein weiterer Vorteil der Erfindung besteht bei Doppelnutzung des Kombi-Fahrzeuges (für berufliche und private Zwecke) beispielsweise auch darin, daß ein mit Berufsgegenständen (etwa schwerem Werkzeug) beladenes Fahrzeug mit einem einzigen Handgriff durch Herausfahren der Ladebühne vollständig entladen werden kann und dann beispielsweise für einen Wochenendausflug zur Verfügung steht.

Die Nutzlast des Fahrzeuges wird durch die Ladebühne geringfügig verringert. Dieser kleine, in der Praxis meist ohnehin nicht ins Gewicht fallende Nachteil wird jedoch bei weitem durch die oben erwähnten Vorteile kompensiert, insbesondere auch durch die Möglichkeit, die Ladebühne außerhalb des Fahrzeuges vollständig und übersichtlich zu beladen. Auch die höhenmäßige Verringerung des Stauraumes durch die Ladebühne ist so minimal, daß sie die erläuterten wesentlichen Vorteile nicht in Frage stellen kann.

Zwei Ausführungsbeispiele der Erfindung ist in der Zeichnung veranschaulicht. Es zeigen:
- Fig.1: eine Seitenansicht eines Fahrzeuges mit teilweise herausgezogener Ladebühne,
- Fig.2: eine Ansicht in den Laderaum des Fahrzeuges bei eingeschobener Ladebühne,
- Fig.3: eine Ansicht der Ladebühne eines ersten Ausführungsbeispieles im vollständig herausgezogenen Zustand,
- Fig.4: einen Schnitt längs der Linie IV-IV der Fig.3 (wobei die linke Radhalterung im ausgeschwenkten und die rechte Radhalterung im eingeschwenkten Zustand dargestellt ist),
- Fig.5: eine Teilansicht des ersten Ausführungsbeispieles von unten,
- Fig.6: einen Schnitt längs der Linie VI-VI der Fig.5,
- Fig.7 und 8: Schnittansichten (um 90° gegeneinander verdreht) der arretierbaren Teleskoprohre einer Radhalterung des ersten Ausführungsbeispieles,
- Fig.9: eine Ansicht der Ladebühne des ersten Ausführungsbeispieles von unten,
- Fig.10: eine Ansicht einer Ladebühne eines zweiten Ausführungsbeispieles von unten,
- Fig.11: einen Schnitt längs der Linie XI-XI der Fig.10,
- Fig.12: eine Schnittansicht einer weiteren Ausführungsform der arretierbaren Teleskoprohre.

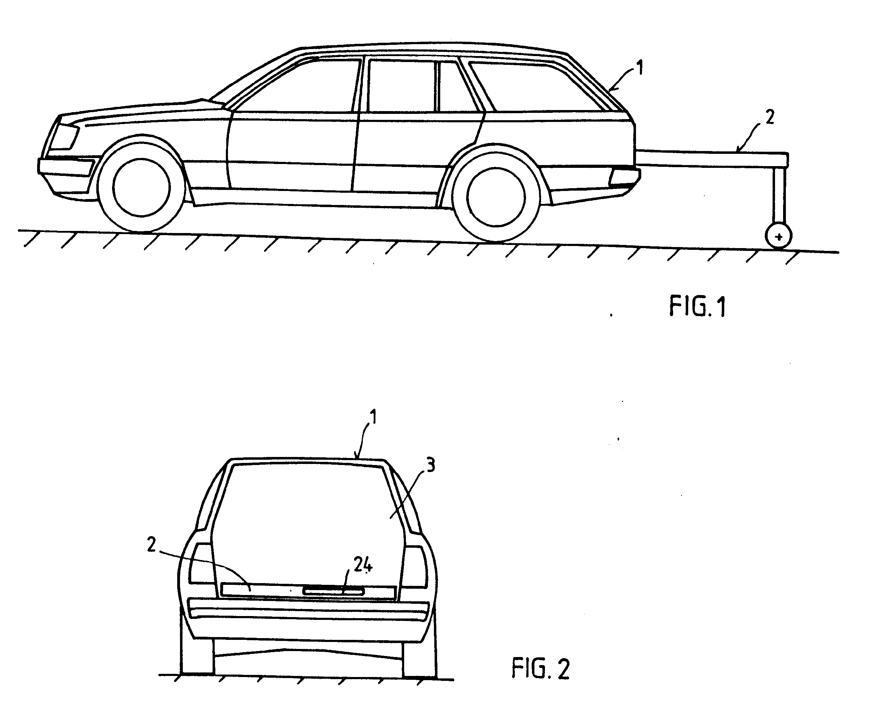

Fig.1 zeigt ein Kombi-Fahrzeug 1 mit einer Ladebühne 2, die teilweise aus dem Laderaum des Fahrzeuges 1 herausgezogen ist.

Fig.2 zeigt das Kombi-Fahrzeug 1 von hinten, in dessen Laderaum 3 die Ladebühne 2 eingeschoben ist.

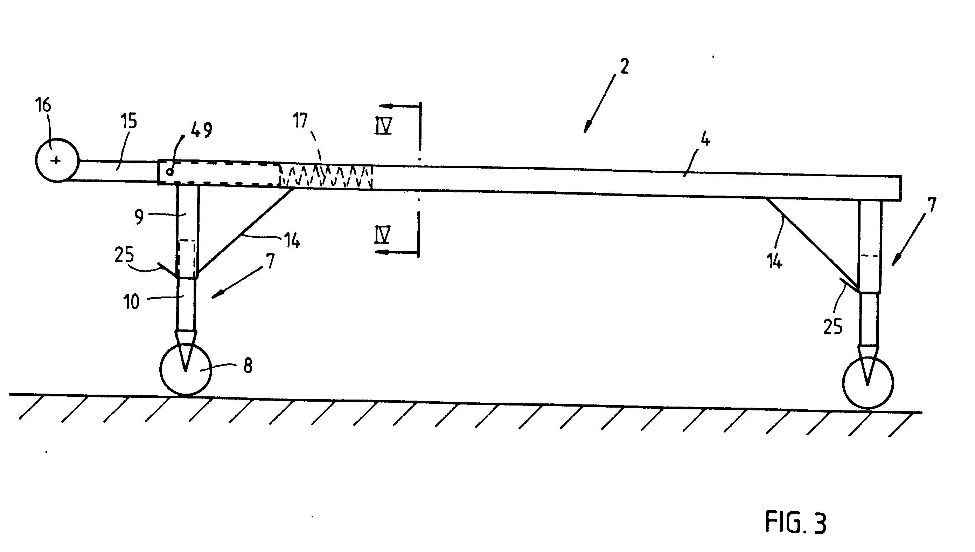

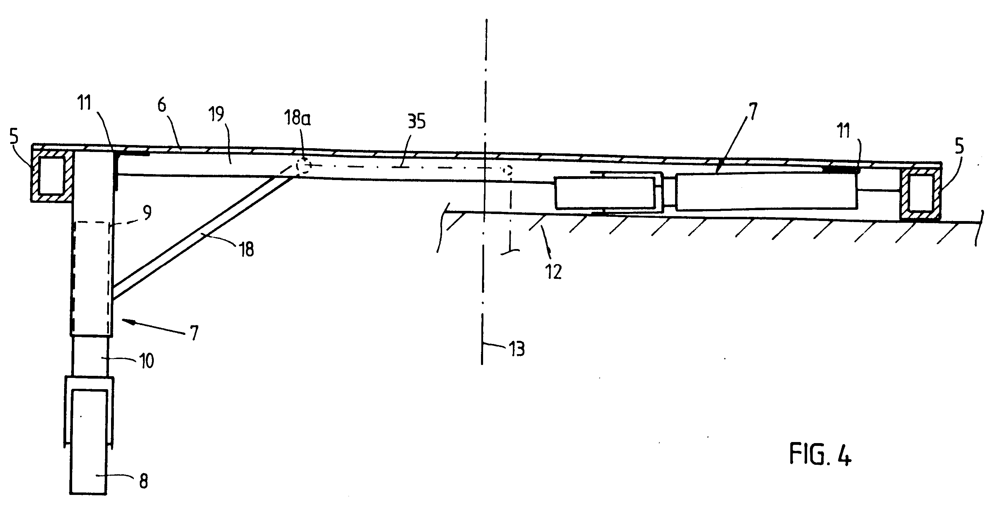

Wie insbesondere die Fig.3 und 4 erkennen lassen, enthält die Ladebühne 2 eine Plattform 4, die in den Laderaum des Fahrzeuges einschiebbar und aus dem Laderaum herausziehbar ist. Diese Plattform 4 besteht im wesentlichen aus einem Rahmengestell 5 und einer die Oberseite der Plattform 4 bildenden stabilen Decke 6.

Mit der Plattform 4 sind vier Radhalterungen 7 verbunden, die an ihren freien Enden Räder 8 tragen.

Die Radhalterungen bestehen - wie noch im einzelnen erläutert wird - jeweils aus zwei Teleskoprohren 9 und 10, die gleitbeweglich gegeneinander verschiebbar und in einer wählbaren Auszugslage arretierbar sind.

Dabei trägt das untere Teleskoprohr 10 das Rad 8, während das obere Teleskoprohr 9 über eine Achse 11 (die beispielsweise durch ein Scharnier gebildet werden kann) schwenkbar mit der Plattform 4 verbunden ist.

Wie Fig.4 erkennen läßt, stützen sich die Radhalterungen 7 im ausgeschwenkten Zustand (Fig.4 links) auf dem Erdboden ab, wenn die Ladebühne 2 aus dem Fahrzeug 1 herausgezogen ist. Im eingeschwenkten Zustand (Fig.4 rechts) liegen die Radhalterungen 7 etwa parallel zu der Plattform 4 dicht unter dieser und stützen sich hierbei auf dem Wagenboden 12 ab. Die Radhalterungen 7 werden somit - in Längsrichtung des Fahrzeuges betrachtet - nach innen, d.h. in Richtung auf die Längsmittelebene 13 eingeschwenkt. Im ausgeschwenkten Zustand erfahren die Radhalterungen 7 eine zusätzliche Abstützung (in Fahrzeuglängsrichtung) durch Seitenstreben 14, die starr mit den Teleskoprohren 9 verbunden sind.

Aus der einen Stirnseite der Plattform 4, und zwar an der dem Fahrzeug 1 zugewandten Stirnseite, sind zwei Ausleger 15 vorgesehen, die an ihren freien Enden je eine Rolle 16 tragen und die vorzugsweise gegen die Wirkung einer Druckfeder 17 in das Rahmengestell 5 der Plattform 4 einschiebbar sind. Mit den Rollen 16 rollt die Ladebühne 2 beim Einschieben und Herausziehen auf dem Boden des Laderaumes 3 des Fahrzeuges.

Anhand der Fig.4, 5 und 6 sei im folgenden die Arretierung der Radhalterungen 7 im ausgeschwenkten Zustand näher erläutert.

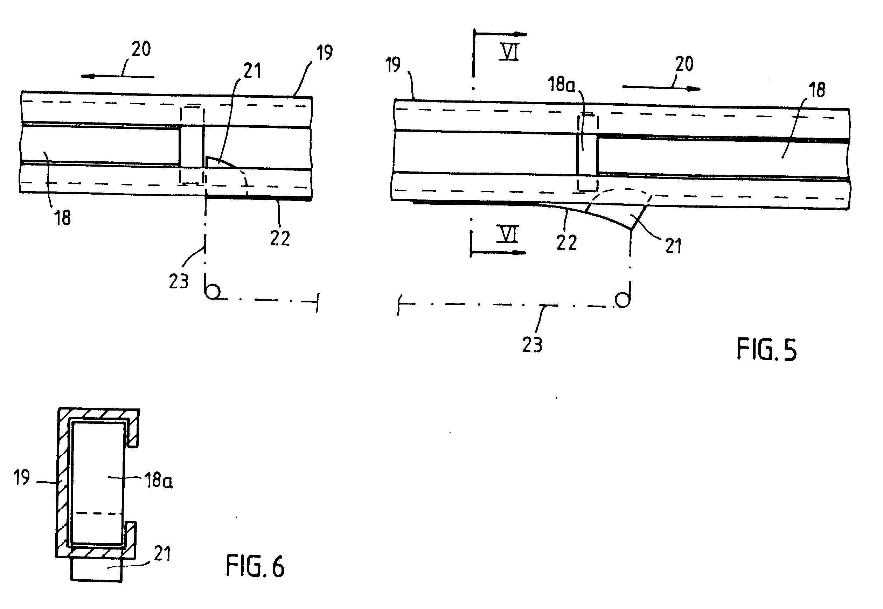

Wie insbesondere Fig.4 erkennen läßt, sind die oberen Teleskoprohre 9 der Radhalterungen 7 mit einer Strebe 18 verbunden, deren anderes Ende mit einem Führungsstück 18a in einer Laufschiene 19 geführt ist, die ein im wesentlichen U-förmiges Querschnittsprofil mit nach innen abgewinkelten Profil-Längskanten aufweist (vgl. Fig.6).

Werden die Radhalterungen 7 nach außen geschwenkt, so bewegen sich die Führungsstücke 18a der Streben 18 in der Laufschiene 19 gleichfalls nach außen (d.h. in Richtung der Pfeile 20 gemäß Fig.5). Hierbei passieren sie Arretierungselemente 21, die unter der Wirkung von Federn 22 stehen und durch einen seitlichen Durchbruch in die Laufschiene 19 eingreifen.

Kommt das Führungsstück 18a bei seiner Auswärtsbewegung in den Bereich des Arretierungselemtes 21 (Fig.5 rechts), so drückt es dieses Arretierungselement 21 nach außen. Hat es dann das Arretierungselement 21 passiert (vgl. Fig. 5 links), so schnappt das Arretierungselement 21 hinter dem Führungsstück 18a nach innen und sichert damit die zugehörige Radhalterung 7 im ausgeschwenkten Zustand.

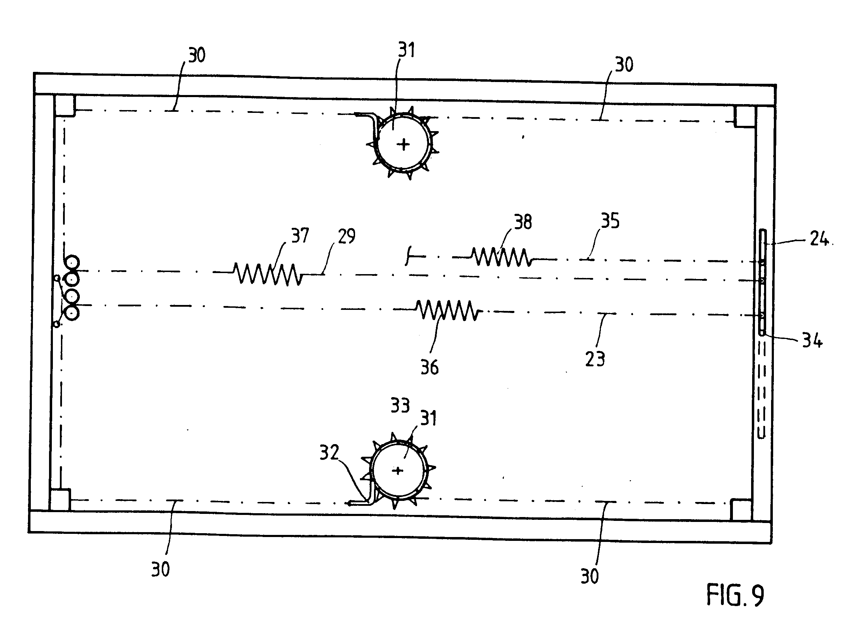

Um die Arretierungselemente 21 zu lösen, sind diese Elemente über einen Seilzug 23 miteinander sowie mit einem anhand von Fig.9 noch im einzelnen erläuterten Betätigungselement 24 verbunden. Durch Ziehen an dem Seilzug 23 verlassen die Arretierungselemente 21 ihre Arretierungslage, so daß die Radhalterungen 7 mit den Streben 18 nach innen geschwenkt werden können.

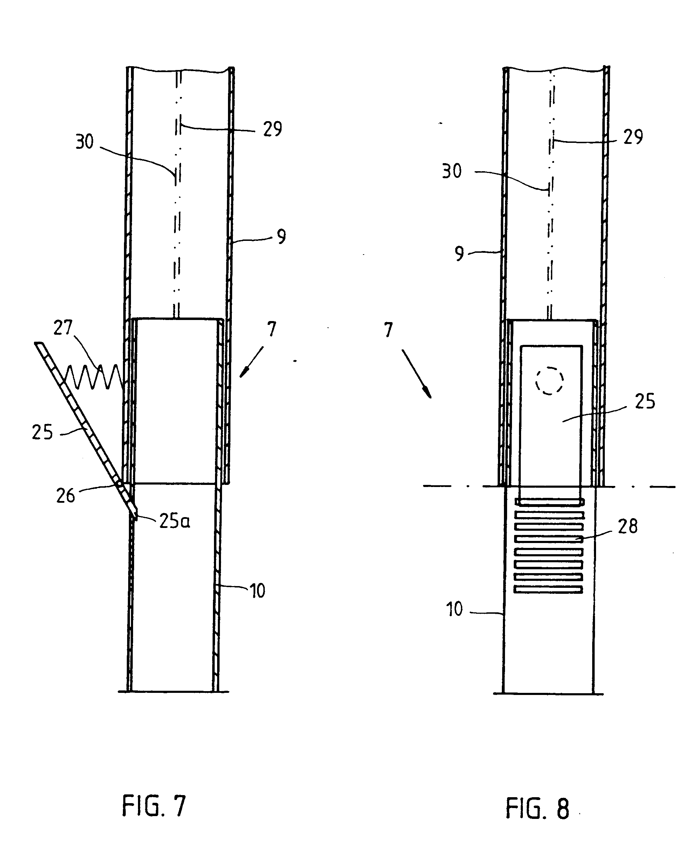

Fig.7 und 8 veranschaulichen die Maßnahmen, um die Teleskoprohre 9 und 10 der Radhalterungen 7 in einer gewünschten Auszugslage (entsprechend der jeweiligen Höhe der Plattform 4 über dem Erdboden) zu arretieren. Zu diesem Zweck ist an dem oberen Teleskoprohr) der einzelnen Radhalterungen 7 ein Arretierungshebel 25 schwenkbar (mittels einer Achse 26) angelenkt, wobei der Arretierungshebel 25 durch eine Druckfeder 27 im Gegenuhrzeigersinn verschwenkt wird und hierbei mit seinem unteren Ende 25a in eine von mehreren Ausnehmungen 28 eingreift, die in Form von eingefrästen Rillen in dem Teleskoprohr 10 vorgesehen sind. Bei eingerastetem Arretierungshebel 25 kann sich das von der Radhalterung 7 gebildete Standbein durch Zusammenschieben der Teleskoprohre 9 und 10 nicht verkürzen.

Stößt beim Einschieben der Ladebühne 2 in das Fahrzeug 1 zunächst der Arretierungshebel 25 der beiden vorderen Radhalterungen 7 gegen die Stoßstange des Fahrzeuges, so wird hierdurch der Arretierungshebel 25 im Uhrzeigersinn verschwenkt und die Arretierung aufgehoben. Das untere Telsekoprohr 10 kann dann in das obere Teleskoprohr 9 eingezogen werden. In gleicher Weise erfolgt die Aufhebung der Arretierung der Teleskoprohre der hinteren Radhalterungen 7, wenn gegen Ende der Einfahrbewegung die Arretierungshebel 25 der beiden hinteren Radhalterungen 7 gegen die Stoßstange des Fahrzeuges stoßen.

Um die unteren Teleskoprohre 10 in die oberen Telskoprohre 9 einzuziehen, wenn die Arretierung durch die Arretierungshebel 25 aufgehoben ist, stehen die Teleskoprohre 10 über einen Seilzug 29 mit dem Betätigungshebel 24 in Verbindung.

Anhand von Fig.9 seien weiterhin die Maßnahmen erläutert, die bei der erfindungsgemäßen Ladebühne vorgesehen sind, um zu gewährleisten, daß beim Ausfahren der Ladebühne aus dem Fahrzeug alle vier Räder auf gleiche Höhe ausgefahren werden.

Die die Räder tragenden unteren Teleskoprohre 10 der vorderen und hinteren Radhalterungen 7 sind paarweise (d.h. jeweils die rechten und linken) über Seilzüge 30 mit je einer Trommel 31 verbunden. Diese Trommel sucht unter der Wirkung einer (nicht dargestellten) Feder die beiden Seilzüge aufzuwickeln. Der Trommel 31 ist ferner eine Klinke 32 zugeordnet, die dann, wenn sie in eine mit der Trommel 31 drehbare Außenverzahnung 33 eingreifen kann, die Trommel 31 gegen die Wirkung der Feder arretiert.

Wenn sich beim Ausfahren der Ladebühne 2 aus dem Fahrzeug 1 zunächst die Hinterräder absenken, d.h. die unteren Teleskoprohre 10 der hinteren Radhalterungen 7 eine Abwärtsbewegung ausführen, so rollt die (hierbei nicht durch die Klinke 32 arretierte) Trommel 31 eine entsprechende Länge des mit den hinteren Radhalterungen 7 verbundenen Zugseiles 30 ab. Zugleich wird die gleiche Seilzuglänge auch für die mit den vorderen Radhalterungen 7 verbundenen Seilzüge 30 von der Trommel 31 abgespult. Durch das anschließende Absenken der Vorderräder (beim weiteren Herausfahren der Ladebühne 2 aus dem Fahrzeug 1) werden die Seilzüge 30 der vorderen Radhalterungen 7 gestrafft. Am Ende dieser Seilstraffung wird die Klinke 32 durch den über sie laufenden Seilzug 30 betätigt und blockiert die Trommel 31. Damit können die Vorderräder nicht tiefer als die Hinterräder fallen.

Sobald auf den Seilzügen 30 die Spannung nachläßt (nachdem die anhand der Fig.7 und 8 erläuterte Arretierung mittels des Arretierungshebels 25 gelöst ist) gibt der Hebel 32 die Trommel 31 frei, die durch die (nicht dargestellte) Feder automatisch in die Ausgangslage zurückgedreht wird und damit beim Einziehen der Räder die Seilzüge 30 aufspult.

Durch die mit den erläuterten Maßnahmen erzielte gleiche Auszugslänge der vier Radhalterungen 7 ist gewährleistet, daß die Plattform 4 der Ladebühne 2 auch dann waagerecht steht, wenn sich der hintere Teil des Fahrzeuges 1 beim Herausfahren der Ladebühne 2 aufgrund eines nicht oder nicht sofort funktionierenden Niveauausgleiches etwas höher stellt.

Fig.9 zeigt außer den zuletzt erläuterten Einzelheiten in schematischer Darstellung das Betätigungselement 24, das als ein um einen Drehpunkt 34 schwenkbarer Handhebel (an der hinteren Stirnseite der Ladebühne 2) ausgebildet ist. Dieses Betätigungselement 24 ist zwischen einer (in vollen LInien veranschaulichten) Ruhestellung und einer (gestrichelt veranschaulichten) Arbeitsstellung schwenkbar. Das Betätigungselement nimmt dabei im Normalfall (insbesondere dann, wenn sich die Ladebühne 2 im Fahrzeug befindet) seine Ruhestellung ein. In die Arbeitsstellung wird das Betätingungselement 24 dann geschwenkt, wenn die außerhalb des Fahrzeuges 1 befindliche Ladebühne 2 in das Fahrzeug zurückgeschoben werden soll.

Mit dem Betätigungselement 24 sind drei Seilzüge verbunden, nämlich der Seilzug 23 zum Lösen der Einschwenkarretierung (vgl. Fig.5), der Seilzug 29 zum Einziehen der Räder (vgl. Fig.7, 8) sowie ein weiterer Seilzug 35, der - in nicht im einzelnen veranschaulichter Weise - mit den Führungsstücken 18a der Streben 18 verbunden ist und der das Einschwenken der Radhalterungen 7 nach innen bewirkt.

In den Seilzügen 23, 29 und 35 sind jeweils Zugfedern 36, 37, 38 vorgesehen. Die drei Seilzüge 23, 29 und 35 sind mit unterschiedlichen Punkten des Betätigungselementes 24 verbunden.

Wird das Betätigungselement 24 aus der Ruhestellung in die (gestrichelt veranschaulichte) Arbeitsstellung geschwenkt, wenn die Ladebühne 2 in das Fahrzeug 1 eingeschoben werden soll, so werden die Federn 36, 37, 38 in den Seilzügen 23, 29 und 35 gespannt.

Die Funktion der erfindungsgemäßen Ladebühne ist damit insgesamt wie folgt:

In der Ausgangsposition steht die Ladebühne 2 auf ebenem Boden, wobei die Radhalterungen 7 im ausgeschwenkten Zustand und in ihrer Länge arretiert sind.

Um die Ladebühne 2 in das Kombi-Fahrzeug einzuladen, wird sie von Hand bis an das Fahrzeug herangeschoben, so daß sich die beiden Ausleger 15 über der Ladefläche des Fahrzeuges befinden. Drückt man nun die Ladebühne 2 an das Fahrzeug 1, so werden die Arretierungshebel 25 der beiden vorderen Radhalterungen 7 durch Berühren der Stoßstange des Fahrzeuges aus der Arretierungslage geschwenkt, so daß sich die unteren Teleskoprohre 10 der beiden vorderen Radhalterungen 7 nunmehr lose in den oberen Teleskoprohren befinden.

Schwenkt man nun das Betätigungselement 24 in die in Fig.9 gestrichelte Arbeitslage, so werden die Zugfedern 36, 37, 38 und damit die Seilzüge 23, 29 und 35 gespannt. Durch den Seilzug 23 werden infolgedessen die Arretierungselemente 21 (vgl. Fig.5) aus der Arretierungslage entfernt. Infolgedessen werden die beiden vorderen Radhalterungen 7 durch den gespannten Seilzug 35 (der an den Führungsstücken 18a der Streben 18 angreift) nach innen geschwenkt. Gleichzeitig werden die Teleskoprohre 9 eingezogen. Die beiden vorderen Radhalterungen 7 kommen auf diese Weise in die in Fig.4 (rechts) veranschaulichte Lage.

Die Ladebühne 2 kann damit so weit in das Fahrzeug eingeschoben werden, bis die beiden hinteren Radhalterungen 7 mit ihren Arretierungshebeln 25 gegen die Stoßstange des Fahrzeuges 1 stoßen. Hierdurch wird die Längenverriegelung der hinteren Radhalterungen 7 aufgehoben, so daß die Teleskoprohre 10 der hinteren Radhalterungen 7 durch den (noch immer gespannten) Seilzug 29 eingezogen werden. Sobald dabei die hinteren Räder den Erdboden verlassen, werden die hinteren Radhalterungen durch den (gleichfalls noch gespannten) Seilzug 35 nach innen geschwenkt. Damit klappen auch die hinteren Räder unter der Plattform 4 der Ladebühne 2 zusammen.

Beim vollständigen Hineindrücken der Ladebühne 2 in das Fahrzeug 1 tauchen die Ausleger 15 in das Rohrrahmengestell 5 der Plattform 4 ein. Das Betätigungselement 24 wird nun wieder in die (in Fig.9 mit voll ausgezogenen Linien veranschaulichte) Ruhelage zurückgestellt, so daß die Seilzüge entlastet werden und damit die Radhalterungen 7 mit ihren Rädern 8 auf dem Boden des Fahrzeuges ruhen.

Wird die Ladebühne 2 aus dem Fahrzeug 1 herausgezogen, so schwenken zunächst die beiden hinteren Radhalterungen 7 unter der Wirkung des Eigengewichts nach unten. Die Teleskoprohre 10 arretieren dabei in den Teleskoprohren 9, sobald die Räder 8 den Boden berühren.

Gleichzeitig mit dem Herausziehen der Ladebühne 2 aus dem Fahrzeug 1 fahren auch die Ausleger 15 wieder aus, so daß die Ladebühne 2 mit ihrem vordersten Bereich (über die Rollen 16) noch im Fahrzeug abgestützt ist, während die vorderen Radhalterungen 7 in ihre Ausschwenklage fallen, wobei sie in der ausgeschwenkten Lage und in ihrer Länge arretieren, sobald die vorderen Räder 8 den Erdboden berühren.

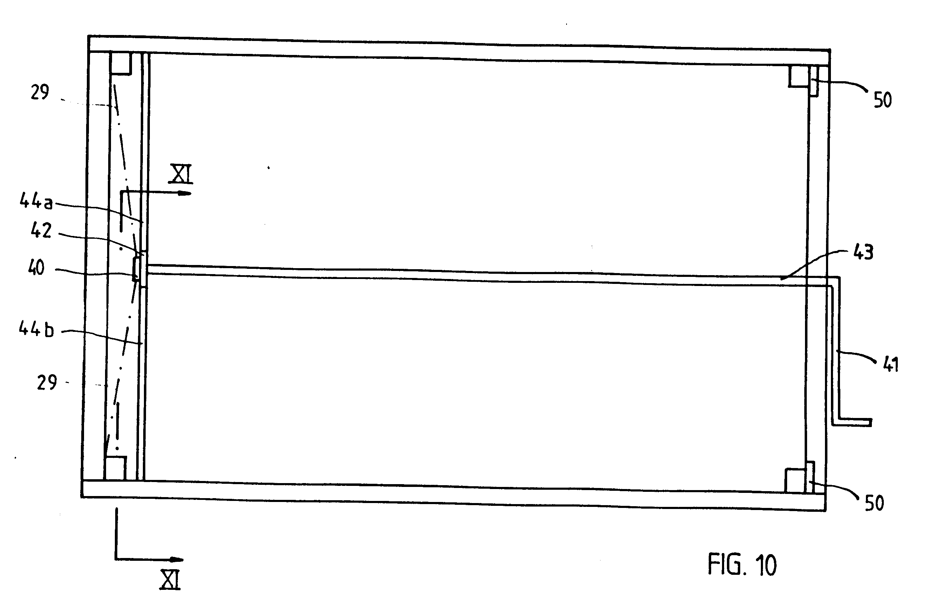

In Fig.10 ist ein weiteres Ausführungsbeispiel einer erfindungsgemäßen Ladebühne gezeigt. Das zweite Ausführungsbeispiel unterscheidet sich vom ersten im wesentlichen nur dadurch, daß für das Einziehen des unteren Teleskoprohres 10 und das Einschwenken der Radhalterungen 7 unterschiedliche Betätigungsmechanismen verwendet werden.

Wie aus Fig.10 ersichtlich ist, wird das Betätigungselement hier durch eine mit einer Achse 43 zusammenwirkenden Kurbel 41 gebildet. Die Achse 43 ist in ihrer Längsrichtung verschiebbar und trägt an ihrem, dem der Kurbel 41 gegenüberliegenden Ende eine Einheit bestehend aus einer Trommel 40 und einem Zahnrad 42.

Die mit ihrem einen Ende an den unteren Teleskoprohren 10 befestigten Seilzüge 29 sind mit ihrem anderen Ende auf der Trommel 40 derart befestigt, daß ein Drehen der Trommel ein Aufwickeln des Seilzuges und damit ein Einziehen der Teleskoprohre 10 in die Teleskoprohre 9 bewirkt.

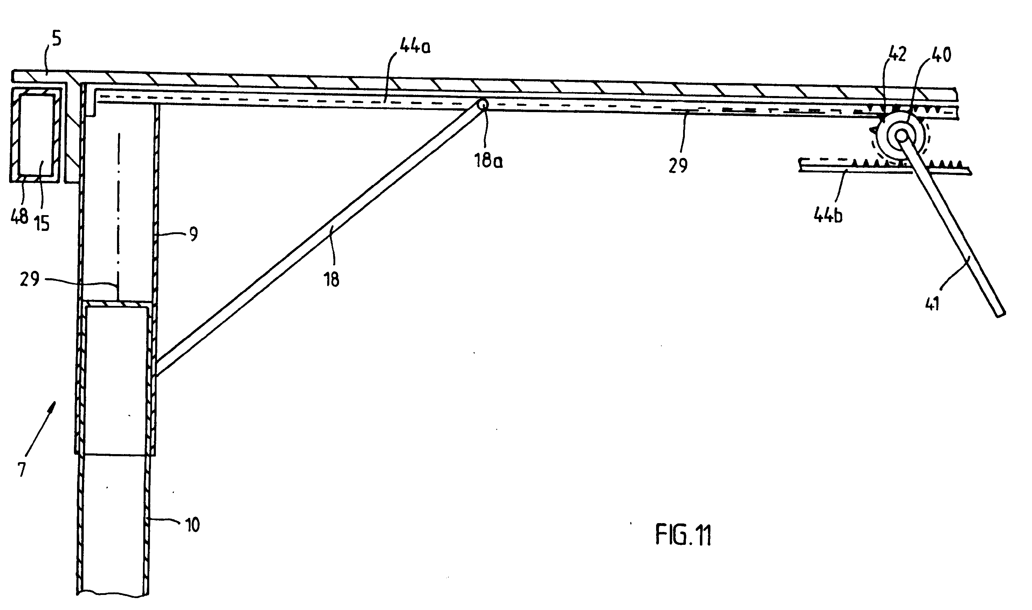

Wie insbesondere in Verbindung mit Fig.11 zu erkennen ist, greift das Zahnrad 42 in zwei quer zur Achse 43 verschiebbare Zahnstangen 44a und 44b ein. Auf beiden Zahnstangen 44a, 44b sind jeweils ein nicht näher veranschaulichter Mitnehmer vorgesehen, der bei einer seitlichen Verschiebung der Zahnstangen zum einen das Arretierungselement 21 löst und zum anderen das Führungsstück 18a seitlich verschiebt, so daß über die damit verbundene Strebe 18 die Radhalterungen 7 eingeschwenkt werden.

Das Einschwenken der Radhalterungen 7 geschieht im einzelnen folgendermaßen:

Indem die Kurbel 41 in Richtung der Achse 43 nach vorn gedrückt wird, rastet die Achse 43 in die Einheit bestehend aus der Trommel 40 und dem Zahnrad 42 ein. Das anschließende Drehen der Kurbel 41 bewirkt eine entsprechende Drehung des Zahnrades 42, wodurch die Zahnstangen 44a und 44b seitlich gegeneinander verschoben werden. Gleichzeitig dreht sich die Trommel 42 mit und wickelt die Seilzüge 29 auf, so daß sich die Teleskoprohre 9 in die Teleskoprohre 10 einziehen. Während dieses Einziehens werden gleichzeitig - aufgrund der seitlichen Verschiebung der beiden Zahnstangen 44a, 44b - die vorderen beiden Radhalterungen 7 eingeschwenkt. Am Ende des Kurbelweges sind die Teleskoprohre 9 völlig eingezogen und ferner sind die beiden vorderen Radhalterungen 7 unter die Plattform 4 eingeschwenkt.

Durch das Einrasten der Achse 43 in die Einheit bestehend aus Trommel 40 und Zahnrad 42 wird gleichzeitig eine nicht näher veranschaulichte Arretierung betätigt, die einen Rücklauf entgegen der Drehrichtung der Kurbel verhindert. Sobald die Achse 43 aus der Einheit bestehend aus Trommel 40 und Zahnrad 42 wieder herausgezogen wird, löst sich diese Arretierung, und die Einheit ist auf der Achse 43 wieder frei drehbar. Dies ermöglicht beim Herausziehen der Plattform 4 das bereits zum ersten Ausführungsbeispiel beschriebene Ausklappen der Radhalterungen 7.

Der Einschwenkmechanismus für die beiden hinteren Radhalterungen 7 kann in analoger Art und Weise vorgesehen werden. Hierfür kann beispielsweise eine weitere Einheit bestehend aus Trommel und Zahnrad auf der Achse 43 vorgesehen werden, die nicht durch Eindrücken, sondern Herausziehen der Achse 43 mit entsprechenden Zahnstangen in Eingriff kommt.

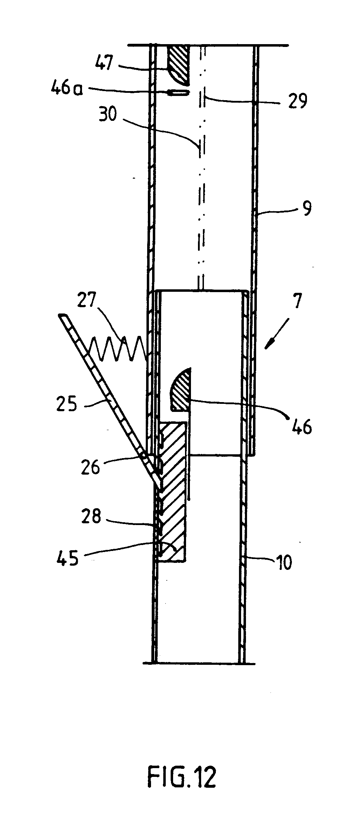

Fig.12 zeigt eine weitere Ausführungsform der arretierbaren Teleskoprohre einer Radhalterung. Im Unterschied zur ersten Ausführungsform gemäß Fig.7, bei der die Ausnehmungen 28 im unteren Teleskoprohr 10 vorgesehen sind, ist bei der zweiten Ausführungsform gemäß Fig.12 eine zusätzliche Platte 45, beispielsweise eine eingeschweißte Stahlplatte, mit entsprechend eingefrästen Ausnehmungen 28 vorgesehen.

Die Funktion erfolgt in gleicher Weise wie bei der ersten Ausführungsform gemäß Fig.7.

Die Platte 45 weist jedoch ein weiteres Arretierungselement 46 auf, das mit einem Ansatz 46a zusammenwirkt. Durch diesen Arretierungsmechanismus soll das untere Teleskoprohr 10 so lange in dem oberen Teleskoprohr 9 gehalten werden, bis das obere Teleskoprohr 9 völlig ausgeschwenkt und im wesentlichen senkrecht zum Erdboden ausgerichtet ist. Erst in diesem Zustand soll ein Bolzen 47 das Arretierungselement 46 lösen, so daß erst dann das untere Teleskoprohr 10 zur gleitbeweglichen Verschiebung aus dem Teleskoprohr 9 freigegeben wird.

Wird eine beladene Ladebühne aus einem Fahrzeug herausgezogen, so wird das leere Fahrzeug aufgrund seiner Federelemente entsprechend ausfedern. Dies hat jedoch zur Folge, daß anschließend das Niveau der Ladebühne tiefer als der Boden des Laderaumes liegt. Dies kann jedoch u.U. beim erneuten Einschieben der Ladebühne problematisch sein.

In einer weiteren Ausgestaltung der Erfindung ist aus diesem Grund der Ausleger 15 teleskopartig in einem Rohrrahmen 48 geführt (vgl. Fig.11). Dieser Rohrrahmen 48 ist über die gesamte Länge des Rahmengestells 5 derart befestigt, daß er um einen Drehpunkt 49 (siehe Fig.3) drehbar ist. Am hinteren Ende der Plattform 4 sind die beiden Rohrrahmen 48 durch je ein lösbares Arretierungselement 50 gesichert.

Ein Lösen der Arretierungselemente 50 und ein anschließendes Senken der beiden Rohrrahmen 48 im hinteren Bereich der Plattform bewirkt ein gleichzeitiges Anheben der an den beiden Auslegern 15 befestigten Rollen 16. Damit läßt sich auf einfache Art und Weise ein Höhenunterschied zum Boden des Laderaumes ausgleichen.

Die Ladebühne kann dann soweit an das Fahrzeug herangefahren werden, daß durch Anheben der beiden Rohrrahmen 48 die beiden Rollen 16 auf dem Boden des Laderaumes aufsetzen. Durch den großen Hebeleffekt ist ein manuelles Anheben der beiden Rohrrahmen 48 bis zum Eingreifen der Arretierungselemente 50 einfach und ohne größeren Kraftaufwand möglich.

## Patentansprüche

1. Ladebühne für Kombi-Fahrzeuge, bestehend aus:
a) einer in den Laderaum (3) des Fahrzeugs (1) einschiebbaren und aus dem Laderaum herausziehbaren Plattform (4),
b) mit der Plattform (4) schwenkbeweglich verbundene Radhalterungen (7), die im ausgeschwenkten Zustand die aus dem Fahrzeug herausgezogene Plattform (4) auf dem Erdboden abstützen und im eingeschwenkten Zustand etwa parallel zu der im Fahrzeug befindlichen Plattform dicht unter dieser liegen,
c) mit der Plattform (4) verbundenen Arretierungseinrichtungen zur Sicherung der Radhalterungen (7) im ausgeschwenkten Zustand,
d) einem Betätigungselement (24, 41) zum Lösen der Arretierungseinrichtungen.

2. Ladebühne nach Anspruch 1, dadurch gekennzeichnet, daß die Radhalterungen (7) um parallel zur Fahrzeuglängsrichung verlaufende Achsen (11) schwenkbar sind.

3. Ladebühne nach Anspruch 1, dadurch gekennzeichnet, daß die Radhalterungen (7) jeweils zwei Teleskoprohre (9, 10) aufweisen, die durch eine Arretierungeinrichtung in einer wählbaren Auszugslage arretierbar sind.

4. Ladebühne nach Anspruch 1, dadurch gekennzeichnet, daß an der einen Stirnseite der Plattform (4) zwei Ausleger (15) vorgesehen sind, die an ihren freien Enden je eine Rolle (16) tragen und vorzugsweise gegen die Wirkung einer Druckfeder (17) in die Plattform (4) einschiebbar sind.

5. Ladebühne nach Anspruch 1, dadurch gekennzeichnet, daß die zur Sicherung der Radhalterung (7) im ausgeschwenkten Zustand bestimmten Arretierungseinrichtungen ein federbelastetes Arretierungselement (21) enthalten, das in der Arretierungslage eine Strebe (18) der Radhalterung (7) an einer Einwärtsbewegung hindert.

6. Ladebühne nach Anspruch 3, dadurch gekennzeichnet, daß die zur Arretierung der Teleskoprohre (9,10) der Radhalterungen (7) bestimmte Arretierungseinrichtung einen an dem einen Teleskoprohr (9) schwenkbar angelenkten Arretierungshebel (25) enthält, der in der Arretierungslage unter der Wirkung einer Druckfeder (27) in eine von mehreren Ausnehmungen (28) des anderen Teleskoprohres (10) eingreift und beim Einfahren der Plattform (4) in den Laderaum (3) des Fahrzeugs (1) durch Berührung der Stoßstange des Fahrzeuges aus der Arretierungslage geschwenkt wird.

7. Ladebühne nach Anspruch 6, dadurch gekennzeichnet, daß die die Räder (8) tragenden Teleskoprohre (10) der Radhalterungen (7) über einen zum Einziehen der Räder dienenden Seilzug (29) mit dem Betätigungselement (24, 41) in Wirkzusammenhang stehen, das zugleich zum Lösen der die Radhalterungen (7) im ausgeschwenkten Zustand sichernden Arretierungseinrichtungen dient.

8. Ladebühne nach Anspruch 3, dadurch gekennzeichnet, daß die die Räder (8) tragenden Teleskoprohre (10) der beiden vorderen Radhalterungen (7) mit den entsprechenden Teleskoprohren (10) der beiden hinteren Radhalterungen (7) paarweise über Seilzüge (30) mit je einer Trommel (31) verbunden sind, die unter der Wirkung einer Feder die beiden Seilzüge (30) aufzuwickeln sucht, die ferner beim Absenken des Hinterrades eine gleichgroße Seilzuglänge für das zugehörige Vorderrad abspult und die bis zur Straffung dieses Seilzuges (30) durch eine Klinke (32) arretierbar ist.

9. Ladebühne nach Anspruch 7, dadurch gekennzeichnet, daß ein zur Aufhebung der Arretierung der Radhalterungen (7) im ausgeschwenkten Zustand dienender Seilzug (23), der zum Einziehen der Räder (8) dienende Seilzug (29) sowie ein zum Einschwenken der Radhalterungen (7) dienender Seilzug (35) jeweils mit einer Zugfeder (36, 37, 38) versehen und mit dem als schwenkbarer Hebel ausgebildeten Betätigungselement (24) verbunden sind, wobei sich das Betätigungselement (24) bei entlasteten Zugfedern in der Ruhestellung befindet, wenn sich die Plattform (4) im Fahrzeug (1) befindet, während das Betätigungselement (24) unter Spannung der Zugfedern (36, 37, 38) in die Arbeitsstellung geschwenkt wird, wenn die außerhalb des Fahrzeuges (1) befindliche Plattform (4) in das Fahrzeug zurückgeschoben werden soll.

10. Ladebühne nach Anspruch 5, dadurch gekennzeichnet, daß die zur Sicherung der Radhalterungen (7) im ausgeschwenkten Zustand dienenden Streben (18) der vorderen und hinteren Radhalterungen (7) jeweils paarweise in an der Unterseite der Plattform (4) vorgesehenen Laufschienen (19) geführt sind, die ein im wesentlichen U-förmiges Querschnittsprofil mit nach innen abgewinkelten Profil-Längskanten aufweisen.

11. Ladebühne nach Anspruch 7, dadurch gekennzeichnet, daß das Betätigungselement (24) durch eine mit einer Einheit, bestehend aus einer Trommel (40) und einem Zahnrad (42), zusammenwirkenden Kurbel (41) gebildet wird, wobei der mit dem Teleskoprohr (10) verbundene Seilzug (29) auf der Trommel (40) aufwickelbar ist und das Zahnrad zum Einschwenken der Radhalterungen (7) in wenigstens eine mit den Radhalterungen (7) in Verbindung stehenden Zahnstange (44a, 44b) eingreift.

12. Ladebühne nach Anspruch 6, dadurch gekennzeichnet, daß die Ausnehmungen (28) in einer mit dem anderen Teleskoprohr (10) verbundenen Platte (45) vorgesehen sind, wobei die Platte (45) ein Arretierungselement (46) aufweist, das das in das Teleskoprorhr (9) eingeschobene Teleskoprohr (10) erst im ausgeschwenkten Zustand der Radhalterung (7) zum Auszug freigibt.

13. Ladebühne nach Anspruch 4, dadurch gekennzeichnet, daß die zwei Ausleger (15) in je einem seitlich an der Plattform (4) schwenkbeweglich angebrachten Rohrrahmen (48) einschiebbar sind, wodurch die Rollen (16) zum Zwecke eines Niveauausgleichs zwischen dem Laderaum (3) und der Plattform (4) anhebbar sind.

## Claims

1. Loading trolley for estate cars, consisting of:
a) a platform (4) which can be pushed into the luggage space (3) of the vehicle (1) and pulled out of the luggage space,
b) wheeled supports (7) which are pivotably connected to the platform (4) and which when pivoted out support the platform (4), which has been pulled out of the vehicle, on the ground and when pivoted in lie approximately parallel to and close below the platform which is located in the vehicle,
c) locking arrangements which are connected to the platform (4) for securing the wheeled supports (7) in the pivoted-out position,
d) an actuating element (24, 41) for releasing the locking arrangements.

2. Loading trolley as claimed in claim 1, characterised in that the wheeled supports (7) are pivotable about spindles (11) running parallel to the longitudinal direction of the vehicle.

3. Loading trolley as claimed in claim 1, characterised in that the wheeled supports (7) each have two telescopic tubes (9, 10) which can be locked by a locking arrangement in a selectable extended position.

4. Loading trolley as claimed in claim 1, characterised in that on the front end of the platform (4) two outriggers (15) are provided which each have a roller (16) on their free ends and can be pushed into the platform (4) preferably against the action of a pressure spring (17).

5. Loading platform as claimed in claim 1, characterised in that the locking arrangements intended for securing the wheeled support (7) in the pivoted-out position contain a spring-loaded locking element (21) which in the locked position prevents a strut (18) of the wheeled support (7) from moving backwards.

6. Loading trolley as claimed in claim 3, characterised in that the locking arrangement for locking the telescopic tubes (9, 10) of the wheeled supports (7) contain a locking lever (25) which is articulated on one telescopic tube (9) and which in the locked position engages under the action of a pressure spring (27) in one of several recesses (28) of the other telescopic tube (10) and when the platform (4) is moved into the luggage space (3) of the vehicle (1) is pivoted out of the locked position by contact with the bumper of the vehicle.

7. Loading trolley as claimed in claim 6, characterised in that the telescopic tubes (10) bearing the wheels (8) of the wheeled supports (7) are in operative connection, by means of a cable (29) which serves to draw in the wheels, with the actuating element (24, 41) which serves at the same time for releasing the locking arrangements which secure the wheeled supports (7) in the pivoted-out position.

8. Loading trolley as claimed in claim 3, characterised in that the telescopic tubes (10) of the front wheeled supports (7) bearing the wheels (8) are each connected in pairs to the corresponding telescopic tubes (10) of the two rear wheeled supports (7) by cables (30) to drums (31), wherein each drum attempts to wind up the two cables (30) under the action of a spring and also, when the rear wheel is lowered it unwinds an equal length of cable for the appertaining front wheel and can be locked by a pawl (32) when this cable (30) has been tautened.

9. Loading trolley as claimed in claim 7, characterised in that a cable (23) which serves to release the locking of the wheeled supports (7) in the pivoted-out position, the cable (29) which serves to draw in the wheels (8) and a cable (35) which serves to pivot in the wheeled supports (7) are each provided with a tension spring (36, 37, 38) and connected to the actuating element (24) which is constructed as a pivotable lever, wherein the actuating element (24) is in the rest position with the tension springs relieved when the platform (4) is located in the vehicle (1), whilst the actuating element (24) is pivoted into the working position under tension from the tension springs (36, 37, 38) when the platform (4) located outside the vehicle (1) is to be pushed back into the vehicle.

10. Loading trolley as claimed in claim 5, characterised in that the struts (18) of the front and rear wheeled supports (7) which serve to secure the wheeled supports (7) in the pivoted-out position are each guided in pairs in guide rails (19) provided on the underside of the platform (4), these guide rails having a substantially U-shaped cross-sectional profile with the long edges of the profile bent inwards.

11. Loading trolley as claimed in claim 7, characterised in that the actuating element (24) is formed by a crank handle (41) which co-operates with a unit consisting of a drum (40) and a toothed wheel (42), wherein the cable (29) connected to the telescopic tube (10) can be wound on to the drum (40) and the toothed wheel for pivoting in the wheeled supports (7) engages in at least one toothed rack (44a, 44b) connected to the wheeled supports (7).

12. Loading trolley as claimed in claim 6, characterised in that the recesses (28) are provided in a plate (45) connected to the other telescopic tube (10), the plate (45) having a locking element (46) by means of which the telescopic tube (9) which has been pushed into the telescopic tube (9) is only released so that it can be extended when the wheeled support (7) is in the pivoted-out position.

13. Loading trolley as claimed in claim 4, characterised in that the two outriggers (15) can each be pushed into a tubular frame (48) which is pivotably attached at the side of the platform (4), as a result of which the rollers (16) can be raised for the purpose of level equalisation between the luggage space (3) and the platform (4).

## Revendications

1. Plateforme de chargement de breaks, se composant :
a) d'un plateau (4) pouvant être introduit dans le compartiment à marchandises (3) du véhicule (1) et en être extrait,
b) de pieds porte-roue (7) reliés à pivotement au plateau (4) et qui, lorsqu'ils sont rabattus vers l'extérieur, supportent sur le sol le plateau extrait du véhicule, tandis que, lorsqu'ils sont rabattus vers l'intérieur, ils sont à peu parallèles au plateau se trouvant dans le véhicule et sont placés étroitement sous ce plateau,
c) de dispositifs de blocage reliés au plateau (4) et destinés à immobiliser les pieds porte-roue (7) rabattus vers l'extérieur,
d) d'un élément de manoeuvre (24, 41) destiné à libérer les dispositifs de blocage.

2. Plateforme de chargement selon la revendication 1, caractérisée en ce que les pieds porte-roue (7) peuvent pivoter autour d'axes (11) parallèles à la direction de la longueur du véhicule.

3. Plateforme de chargement selon la revendication 1, caractérisée en ce que chacun des pieds porte-roue (7) comprend deux tubes télescopiques (9, 10) qui peuvent être immobilisés par un dispositif de blocage à une position d'extension sélectionnable.

4. Plateforme de chargement selon la revendication 1, caractérisée en ce que deux avant-bras (15) prévus sur l'un des côtés extrêmes du plateau (4) et dont chacun supporte une roue (16) à l'extrémité libre peuvent être rétractés dans le plateau (4) de préférence contre la force d'un ressort de compression (17).

5. Plateforme de chargement selon la revendication 1, caractérisée en ce que les dispositifs de blocage destinés à immobiliser les pieds porte-roue (7) après qu'ils ont été rabattus vers l'extérieur comprennent un élément de blocage (21) soumis à la force d'un ressort et qui, lorsqu'il est en position de blocage, interdit à une jambe de force (18) du pied porte-roue (7) d'effectuer un mouvement vers l'intérieur.

6. Plateforme de chargement selon la revendication 3, caractérisée en ce que le dispositif de blocage destiné à immobiliser les tubes télescopiques (9, 10) des pieds porte-roue (7) comprend un levier de blocage (25) articulé de manière oscillante sur un tube télescopique (9) et que la force d'un ressort de compression (27) fait pénétrer dans l'une de plusieurs échancrures (28) de l'autre tube télescopique (10) lorsqu'il est en position de blocage, tandis que, lorsque le plateau (4) est rentré dans le compartiment à marchandises (3) du véhicule (1), le contact de ce levier de blocage avec le pare-chocs du véhicule le fait pivoter en l'extrayant de la position de blocage.

7. Plateforme de chargement selon la revendication 6, caractérisée en ce que les tubes télescopiques (10) des pieds (7) qui supportent les roues (8) coopèrent par l'intermédiaire d'un câble (29) destiné à faire rentrer les roues avec un élément de manoeuvre (24, 41) qui sert également à libérer les dispositifs de blocage destinés à immobiliser les pieds porte-roue (7) à la position dans laquelle ils ont été rabattus vers l'extérieur.

8. Plateforme de chargement selon la revendication 3, caractérisée en ce que les tubes télescopiques (10) des deux pieds antérieurs (7) qui supportent les roues (8) et les tubes télescopiques correspondants (10) des deux pieds porte-roue arrière (7) sont reliés deux à deux par des câbles (30) dans chaque cas à un tambour (31) que la force d'un ressort tend à faire enrouler les deux câbles (30) et qui par ailleurs, lors de la descente de la roue arrière, déroule une longueur égale du câble de la roue antérieure correspondante et qui peut être bloqué par un cliquet (32) jusqu'à ce que ce câble soit raidi.

9. Plateforme de chargement selon la revendication 7, caractérisée en ce qu'un câble (23) destiné à supprimer le blocage des pieds port-roue (7) rabattus vers l'extérieur, le câble (29) destiné à faire rentrer les roues (8) ainsi qu'un câble (35) destiné à rabattre vers l'intérieur les pieds porte-roue (7) sont chacun équipés d'un ressort de traction (36, 37, 38) et sont reliés à un élément de manoeuvre (24) formé d'un levier pivotant, l'élément de manoeuvre (24) se trouvant en position de repos lorsque le plateau (4) se trouve dans le véhicule (20) et que les ressorts de traction sont détendus, tandis que l'élément de manoeuvre (24) doit être mis en position de travail de manière qu'il tende les ressorts de traction (36, 37, 38) lorsque le plateau (4) se trouvant à l'extérieur du véhicule (1) doit y être réintroduit.

10. Plateforme de chargement selon la revendication 5, caractérisée en ce que les jambes de force (18) des pieds porte-roue antérieurs et arrière (7) destinés' à immobiliser ces derniers en position de rabattement vers l'extérieur sont guidés deux à deux dans des glissières (19) prévues sur le côté inférieur du plateau (4), ces glissières ayant un profil transversal sensiblement en étrier, les bords longitudinaux de ce profilé étant coudés vers l'intérieur.

11. Plateforme de chargement selon la revendication 7, caractérisée en ce que l'élément de manoeuvre (24) est formé d'un manivelle (41) coopérant avec un groupe se composant d'un tambour (40) et d'un pignon (42), le câble (29) relié au tube télescopique (10) pouvant être enroulé sur le tambour (40) et le pignon engrenant avec au moins une crémaillère (44a, 44b) qui est reliée avec les pieds porte-roue (7) pour le rabattement de ceux-ci vers l'intérieur.

12. Plateforme de chargement selon la revendication 6, caractérisée en ce que les échancrures (28) sont prévues dans une plaque (45) reliée à l'autre tube télescopique (10), la plaque (45) comprenant un élément de blocage (46) qui ne libère le tube télescopique (9) rétracté dans le tube télescopique (9) pour lui permettre de s'en extraire qu'au moment auquel le pied porte-roue (7) est à l'état de rabattement vers l'extérieur.

13. Plateforme de chargement selon la revendication 4, caractérisée en ce que chacun des avant-bras (15) peut être introduit dans un cadre tubulaire (48) monté oscillant latéralement sur le plateau (4), les roues (16) pouvant être relevées entre le compartiment à marchandises (3) et le plateau (4) en vue d'un équilibrage de niveau.
